(19) Europäisches Patentamt
European Patent Office
Office européen des brevets

(11) Publication number: **0 056 247 A2**

(12) # EUROPEAN PATENT APPLICATION

(21) Application number: 82100068.4

(22) Date of filing: 07.01.82

(51) Int. Cl.³: **C 08 L 69/00**, C 08 L 25/08, C 08 L 33/02, C 08 L 33/04, C 08 L 55/02, C 08 L 51/04, C 08 L 25/12, C 08 L 25/14, C 08 L 33/08, C 08 L 33/10, C 08 L 33/12

(30) Priority: 09.01.81 US 223606

(43) Date of publication of application: 21.07.82 Bulletin 82/29

(84) Designated Contracting States: AT BE CH DE FR GB IT LI NL SE

(71) Applicant: THE DOW CHEMICAL COMPANY, Dow Center 2030 Abbott Road Post Office Box 1967, Midland Michigan 48640 (US)

(72) Inventor: Henton, David Eugene, 5409 Woodview Pass, Midland Michigan 48640 (US)

(74) Representative: Casalonga, Axel et al, BUREAU D.A. CASALONGA OFFICE JOSSE & PETIT Baaderstrasse 12-14, D-8000 München 5 (DE)

(54) **Heterogeneous blends of aromatic polycarbonate with random copolymers of a monovinylidene aromatic and an unsaturated carboxylic acid.**

(57) This invention is directed to a heterogeneous blend comprising a polycarbonate blended with a random acid copolymer of a monovinylidene aromatic monomer and an α,β-ethylenically unsaturated carboxylic acid, said components being present in proportions such that the blend has (a) a Gardner Dart impact strength of at least 100 in-lbs (11.3 joules), (b) a notched Izod impact strength of at least 3 ft-lbs per inch of notch (0.2 joule per millimeter of notch), (c) a heat distortion temperature of at least 210°F (99°C) as determined by ASTM D-648 [unannealed at 66 pounds per square inch (455 kilopascals)], and (d) a processability of less than 9000 pounds per square inch (62.05 megapascals) at a mold fill time of 3.0 seconds as determined by the test herein. Such blends are particularly useful in the manufacture of molded parts which must be exposed to high temperature during manufacture and use.

EP 0 056 247 A2

0056247

# HETEROGENEOUS BLENDS OF AROMATIC POLYCARBONATE WITH RANDOM COPOLYMERS OF A MONOVINYLIDENE AROMATIC AND AN UNSATURATED CARBOXYLIC ACID

This invention relates to blends of an aromatic polycarbonate with a random monovinylidene aromatic/acid copolymer.

The polycarbonates of dihydric phenol such as bisphenol-A, which are described in U.S. Patent No. 3,028,365, are known to be useful in the manufacture of molded plastic parts. Such resins are notably tough and have moderately high softening temperatures. Unfortunately, however, as a result of their relatively poor melt flow characteristics, such polymers are generally more difficult to mold than is often desirable. Also, such aromatic polycarbonates are relatively expensive materials; thus, it is often desirable to blend them with less expensive polymers such as ABS resins.

Previous attempts to improve melt flow characteristics of these aromatic polycarbonates have generally involved incorporating lower melting and/or less

expensive polymers into the polycarbonate. See, for example, U.S. Patent Nos. 3,130,177; 3,239,582; 3,966,842; 3,862,998 and 3,880,783. The blends resulting from such attempts generally exhibit improved melt flow properties at the sacrifice of other desirable features such as heat resistance, impact strength and the like.

In view of the deficiencies of conventional polycarbonates and blends thereof, it would be highly desirable to provide an economical polycarbonate composition which exhibits improved processability while retaining most of the physical properties characteristic of the original polycarbonate.

The present invention is such a desirable polycarbonate composition. This composition is a heterogeneous blend comprising a polycarbonate of a dihydric phenol blended with a random acid copolymer of a monovinylidene aromatic monomer and an α,β-ethylenically unsaturated carboxylic acid (hereinafter called an acid copolymer), said components being present in proportions such that the blend has (a) a Gardner Dart impact strength of at least 100 in-lbs (11.3 joules), (b) a notched Izod impact strength of at least 3 ft-lbs/-per inch of notch (0.2 joule per millimeter of notch), (c) a heat resistance of at least 210°F (99°C) as determined by ASTM D-648 (unannealed at 66 pounds per square inch (455 kilopascals) and (d) a processability of less than 9,000 pounds per square inch (62.05 megapascals) at a mold fill time of 3.0 seconds as determined by the test procedure herein. The heat resistance is preferably greater than 220°F (104°C), most preferably greater than 230°F (110°C).

Compositions of this invention optionally contain at least one polymer of a polar ethylenically unsaturated monomer other than an acid (hereinafter called compatible polymer) and a rubber component. The compatible polymer functions to improve the flow rate of the blend under the shear conditions which are characteristic of the fabrication of polycarbonate blends without reducing the Gardner Dart impact strength of the blend to a value below 100 in-lbs (11.3 joules) as determined by the test method described hereinafter. In addition, at least a portion of the rubber component is a graft copolymer of a rubber polymer which is grafted with at least a portion of either the acid copolymer or the compatible polymer or both. Also for the purposes of this invention, a block copolymer of a rubber polymer which is blocked with a portion of the acid copolymer, the compatible polymer or both is a suitable substitute for said graft copolymer. Herein, the term "rubber component" shall be generic to include all rubber in the blend in grafted or blocked as well as nongrafted/nonblocked form. Similarly, the terms "acid copolymer" and "compatible polymer" shall include both nongrafted/nonblocked and grafted/blocked portions of said polymers.

The polycarbonate blends of this invention are suitably employed in most applications in which polycarbonates and various rubber modified polymers have previously been utilized. Applications of particular interest for these polycarbonate blends are, for example, housings for electrical appliances, radio and television cabinets, automotive equipment including ornaments, and business machine housings.

Advantageously, these heterogeneous blends comprise from 25 to 99, preferably from 25 to 75, weight percent of the polycarbonate and from 1 to 70, preferably from 5 to 50, most preferably from 10 to 45, weight percent of the acid copolymer. In binary blends consisting only of the polycarbonate and the acid copolymer, the blend suitably contains from 75 to 99, preferably from 75 to 95, weight percent of the polycarbonate and from 1 to 25, preferably from 5 to 25, weight percent of the acid copolymer.

Some of the preferred polycarbonate compositions of the present invention are heterogeneous blends wherein the polycarbonate and the remaining components, rubber, acid copolymer and compatible polymer, exist as at least three separate and distinct phases, i.e., a polycarbonate phase, a rubber phase and an acid copolymer phase, with the rubber phase always being a disperse phase. So long as the proportions of the blend components are sufficient to provide the blend with the properties set forth hereinbefore, such proportions are not particularly critical. Advantageously, however, the blend comprises from 25 to 88, preferably from 30 to 70, weight percent of the polycarbonate; from 10 to 70, preferably from 15 to 50, weight percent of acid copolymer; up to 35, preferably up to 30, weight percent of the compatible polymer and from 2 to 30, preferably from 5 to 20, weight percent of rubber. All of the aforementioned weight percentages are based on the weight of the blend. In blends wherein an emulsion rubber polymer is employed in the rubber component, the most preferred blend optionally exhibits gloss values at an angle of 60° as determined by ASTM D-523 which are greater than 80 percent.

The polycarbonates employed in the blends of this invention suitably contain, and preferably consist essentially of, residues of aromatic diols such as the dihydric phenols represented by the formula:

$$HO-\left[\overset{(Y)_m}{A}\right]_t-\left[\overset{(R)_p}{E}\right]_s-\left[\overset{(Y)_n}{A}\right]_u-OH$$

II

wherein each A is individually an aromatic group such as phenylene, biphenylene, naphthylene, anthrylene and the like; E is alkylene or alkylidene such as methylene, ethylene, ethylidene, propylene, propylidene, isopropylidene, butylene, butylidene, isobutylidene, amylidene or E may be cycloalkylene such as cyclopentylene or cyclohexylene, a sulfur containing linkage such as sulfide, sulfoxide or sulfone, an ether linkage, a carbonyl group, or a tertiary nitrogen group; each R is individually hydrogen or a monovalent hydrocarbon group such as alkyl, aryl, arylalkyl, or cycloaliphatic; each Y is individually chlorine, bromine, fluorine or R wherein R is defined as above; m and n are any whole numbers from and including 0 through the number of positions on A available for substitution; p is any whole number and including 0 through the number of positions available on E; t is any whole number which is 1 or more; s is 0 or 1 and u is any whole number including 0.

Examples of such dihydric phenols include the bis(hydroxyphenyl)alkylidenes such as 2,2-bis-(4-hydroxyphenyl)propane [bisphenol-A]; 2,4'-dihydroxydiphenylmethane; bis-(2-hydroxyphenyl)methane; 1,1-bis(4-hydroxyphenyl)ethane and other bisphenol-A type diols as described in U.S. Patent No. 3,028,365 as well as

the corresponding aromatically substituted or aliphatically substituted dihydric phenols wherein the substituents are halogens such as, for example, Cl, F, Br, I, $-NO_2$, -O-, alkyl, acyl, carboxylate ester, or sulfonate ester. Of the foregoing dihydric phenols, bisphenol-A and substituted bisphenol-A are preferred, with bisphenol-A being most preferred.

While not critical, the molecular weight ($M_w$) of said polycarbonate is preferably in the range from 10,000 to 65,000, more preferably from 20,000 to 40,000, and most preferably from 23,000 to 33,000. Preferably, such polycarbonates are prepared by a conventional technique involving the reaction of one of the aforementioned diols or a mixture of such diols with a carbonyl halide such as phosgene in an organic solution containing a base such as pyridine. Suitable methods for preparing such polycarbonates are further described in U.S. Patent No. 3,028,365.

The acid copolymer employed in the blend of this invention suitably comprises any normally solid random copolymer of at least one monovinylidene aromatic monomer and at least one copolymerizable ethylenically unsaturated carboxylic acid. Preferably, this random copolymer contains polymerized therein from 40 to 99, more preferably from 40 to 98, weight percent of the monovinylidene aromatic monomer, which is preferably styrene, and from 1 to 30, more preferably from 2 to 25, weight percent of the acid comonomer which is preferably an $\alpha,\beta$-ethylenically unsaturated carboxylic acid, especially acrylic acid, methacrylic acid or mixtures thereof. Beneficially, the amount of the acid comonomer in this random copolymer is sufficient if the

acid copolymer, when blended with the polycarbonate, displaces the glass transition temperature (Tg) of the polycarbonate wherein Tg is measured as described hereinafter. Other suitable acids include other α,β-ethylenically unsaturated mono- and dicarboxylic acids such as fumaric, ethacrylic, citraconic, aconitic, itaconic, as well as mixtures of the aforementioned acids. Other suitable monovinylidene aromatic monomers include, for example, t-butylstyrene, α-methylstyrene, p-bromostyrene, α-chlorostyrene, p-chlorostyrene, 2,4-dichlorostyrene, p-methylstyrene, 3,4-dimethylstyrene and mixtures thereof. Other copolymerizable monomers such as methyl methacrylate and comparable hard monomers can be employed in the random acid copolymer. Advantageously, the random acid copolymer contains significantly less than 5 weight percent of α,β-ethylenically unsaturated nitrile. Preferably, the random acid copolymer consists essentially of monovinylidene aromatic, methacrylate esters and acid monomers. Molecular weight of the acid copolymer should be sufficient to enable the blend to have a Gardner Dart impact strength of at least 100 in-lbs (11.3 joules). The random acid copolymer preferably has a weight average molecular weight ($M_w$) as determined by gel permeation chromatography (GPC based on a polystyrene standard) in the range from 50,000 to 300,000, most preferably from 75,000 to 275,000.

The random acid copolymer is readily prepared by known methods of radical polymerization, such as, for example, by bulk polymerization, solution polymerization or emulsion polymerization. Examples of such copolymers and methods for their preparation are disclosed in U.S. Patent Nos. 3,725,360; 2,927,095; 3,401,153; 2,971,939; 2,769,804 and 3,336,267.

The compatible polymer advantageously contains a normally solid nonelastomeric nongrafted polymer (herein called nongrafted compatible polymer) of at least one ethylenically unsaturated polar monomer other than an ethylenically unsaturated acid (as defined hereinbefore). The polymer is considered compatible for the purposes of this invention if it, when blended with the polycarbonate, displaces the glass transition temperature ($T_g$) of the polycarbonate. $T_g$ is advantageously measured using a mechanical spectrometer, e.g., as manufactured by Rheometrics, Inc. The nongrafted compatible polymer has a solubility parameter in the range from 8.5 to 10.5, preferably from 9.0 to 10.2.

For the purposes of this invention, a polar monomer is a polymerizable ethylenically unsaturated compound bearing a polar group having a group moment in the range from 1.4 to 4.4 Debye units as determined by Smyth, C.P., Dielectric Behavior and Structure, McGraw-Hill Book Company, Inc., New York (1955). Exemplary polar groups include -CN, $-NO_2$, -OH, -Br, -Cl, $-NH_2$,

$$-\overset{O}{\overset{\|}{C}}OR \quad \text{and} \quad -O\overset{O}{\overset{\|}{C}}R$$

wherein R is alkyl or aryl. Preferably, the polar monomer is an ethylenically unsaturated nitrile such as, for example, acrylonitrile, methacrylonitrile and fumaronitrile, and alkyl esters of $\alpha,\beta$-ethylenically unsaturated acids, e.g., alkyl acrylates and methacrylates, methyl acrylate, butyl acrylate and methyl methacrylate, with acrylonitrile and methyl methacrylate being most preferred. Preferred nongrafted compatible polymers are copolymers of monovinylidene aromatic monomers as defined hereinbefore and at least one polar

0056247

monomer, especially acrylonitrile and/or methyl methacrylate. Most preferred are polymers containing up to 85 mole percent of styrene, up to 60 mole percent of acrylonitrile, up to 100 mole percent of methyl methacrylate and up to 10 mole percent of ethyl acrylate. The molecular weight of the nongrafted compatible polymer is not particularly critical so long as the compatible polymer can be melt blended with the other components of the blend. Preferably, however, the nongrafted compatible polymer has a weight average molecular weight ($M_w$) as determined by gel permeation chromatography in the range from 40,000 to 300,000, preferably from 60,000 to 300,000.

In general, methods for preparing the compatible polymer are not particularly critical since the desired improvement of physical properties of the blend imparted by the compatible polymer is achieved regardless of the method for preparing said compatible copolymer. Accordingly, these polymers can be prepared by known methods of radical polymerization, e.g., by bulk polymerization or polymerization in solution, suspension or emulsion polymerization or by a combined process such as precipitation and bulk/suspension processes. Examples of such nongrafted compatible polymers and such processes for preparing them are set forth in U.S. Patent Nos. 3,660,535; 3,499,059 and 3,422,981.

The rubber polymers useful as the rubber portion of the rubber component are, for example, polyurethane rubber, ethylene/vinyl acetate rubber, silicone rubber, polyether rubber, polyalkenamer rubber, ethylene-propylene-diene rubber, acrylate rubbers such as butyl acrylate rubbers described in U.S. Patent

No. 3,502,604, and the so-called diene rubbers, i.e., homopolymers of conjugated dienes which contain from 4 to 8 carbon atoms such as butadiene, isoprene, piperylene and chloroprene, copolymers of such dienes with each other and copolymers of such dienes with one or more other monomers such as styrene, acrylic or methacrylic compounds such as acrylonitrile, methacrylonitrile, acrylic acid, methacrylic acid, butyl acrylate, methyl methacrylate, or isobutylene. Preferred rubber polymers are the diene rubbers, particularly polybutadiene and copolymers of butadiene with styrene and/or acrylonitrile. As stated hereinbefore, the term "rubber component" as used in the definition of the blends of this invention requires that at least a portion of the aforementioned rubber polymer be grafted with random acid copolymer or compatible polymer, the latter two polymers being described in more detail hereinbefore. In general, the portion of grafted rubber polymer is sufficient to provide increased impact strength (Gardner Dart or notched Izod) as compared to a blend which is similar in all respects except that it contains no grafted rubber polymer. The aforementioned rubber polymers suitably provide the rubber substrate of the grafted rubber polymer as well as satisfactorily perform as the nongrafted rubber when such is present. Of particular interest as rubber polymers are diene rubbers, butyl acrylate rubbers, and ethylene/propylene diene-modified rubbers (often called EPDM rubbers).

In the preferred diene rubber polymers, the amount of diene is sufficient to provide the desired elastomeric character. An especially preferred group of diene rubbers is one containing from 50 to 100 weight percent of butadiene and/or isoprene in polymerized or copolymerized form and up to 50 weight

percent of monovinylidene aromatic hydrocarbon such as styrene and/or an unsaturated nitrile such as acrylonitrile in polymerized or copolymerized form. Particularly advantageous are the homopolymers of butadiene and the copolymers of butadiene with up to 50 weight percent of styrene and/or acrylonitrile. The preferred rubber polymers exhibit glass transition temperatures ($T_g$) generally less than 0°C, most preferably less than -30°C as determined by differential scanning calorimetry. In the blend of this invention, the rubber polymer advantageously has an average particle size of 10 micrometers or less, preferably in the range from 0.05 to 5 micrometers. The molecular weight of the rubber polymer is not particularly critical so long as the rubber polymer is a reinforcing rubber. Advantageously, the rubber polymer, when in the form of the aforementioned rubber component, is capable of reinforcing the random acid copolymer as determined by the Gardner Dart impact resistance test, i.e., a dispersion of the rubber component in the random acid copolymer will exhibit a Gardner Dart impact resistance greater than that of the random acid copolymer.

In addition to the aforementioned monomeric components, it should be understood that the rubber polymer may also contain relatively small amounts, usually less than 2 weight percent based on the rubber, of a crosslinking agent such as, for example, divinylbenzene, diallylmaleate, or ethylene glycol dimethacrylate, provided that such crosslinking does not eliminate the desired elastomeric character of the rubber polymer. The rubber polymer is readily prepared by known methods of radical polymerization, e.g., by bulk polymerization or polymerization in solution, suspension or emulsion

or by combined process such as precipitation and bulk/-suspension processes. Polymerization processes carried out with the aid of organometallic mixed catalysts such as Ziegler or anionic catalysts are also suitably employed in the preparation of the rubber polymer.

In blends wherein a portion of the aforementioned random acid copolymer is to be grafted upon a portion of the aforementioned rubber polymer, the combination of the nongrafted random acid copolymer and the graft copolymer of rubber polymer and the random acid copolymer is referred to as an acid resin. In such acid resins, the graft copolymer of rubber polymer and random acid copolymer is present in an amount sufficient to provide the resin with a Gardner Dart impact resistance of at least 100 in-lbs (11.3 joules), preferably at least 160 in-lbs (18.1 joules). The acid resin is prepared by known procedures. Examples of such resins and methods for their preparation are described in U.S. Patent Nos. 3,642,949; 3,641,212; 3,919,354 and 3,966,842.

As with the acid copolymer, the compatible copolymer can contain, in addition to the nongrafted compatible polymer, a graft copolymer of the compatible polymer and a rubber polymer (defined hereinbefore). In such instances, the combination of compatible polymer and graft copolymer of the compatible polymer and a rubber polymer is called a compatible resin. In the compatible resin, the graft copolymer is present in an amount sufficient to provide the polycarbonate blend with a Gardner Dart impact resistance of at least 100 in-lbs (11.3 joules), preferably at least 160 in-lbs (18.1 joules). Of the aforementioned compatible resins,

the so-called ABS resins and MBS resins (methyl methacrylate/butadiene/styrene copolymer resins), are especially preferred. Examples of such especially preferred ABS resins are described in U.S. Patent Nos. 3,660,535; 3,499,059 and 3,422,981.

The method of preparing the compatible resin is similarly not particularly critical. However, it is found that the most improvement in impact resistance is obtained when preformed rubber, preferably in the form of emulsion size particles, is dissolved or dispersed in a mixture of the monomeric component(s) of the nongrafted compatible polymer and thereafter heated to polymerize the monomers. Polymerization can be affected by heating this solution of rubber and monomer in mass, in emulsion, or while dispersed as droplets in an inert aqueous medium and at temperatures between 50°C and 180°C and pressures ranging from subatmospheric to superatmospheric. Although not required, it is sometimes desirable to employ a polymerization initiator such as, for example, a peroxygen compound. The especially preferred compatible resins, i.e., the ABS resins, are prepared by conventional ABS polymerization methods, e.g., those described in U.S. Patent Nos. 2,769,804; 3,168,593; 3,243,481; 3,426,103; 3,422,981; 3,499,059; 3,928,494 and 3,660,535.

In the preparation of the blend of the present invention, the aforementioned polymeric components are combined by conventional mixing techniques such as admixing granular or particulate polymeric components and subsequent melt blending of the components. Alternatively, the blends may be prepared by heat plastifying

the higher melting polymeric components, i.e., the polycarbonate and the acid copolymer, and then adding the other components thereto either in granular or heat plastified form. Generally, the order of mixing the blend components is not particularly critical.

One particularly convenient method for preparing the preferred blends in accordance with the present invention is to dry blend a particulate of the polycarbonate with a particulate of the mixture of the remaining rubber component, acid copolymer and compatible polymer. This dry blend is directly fed into a heat fabricating apparatus such as a screw extruder or a reciprocating screw injection molding machine with sufficient mixing. While the particular manner of mixing these components in heat plastified form is not critical, sufficient mixing should be employed to insure a uniform distribution of each of the components throughout the resulted blend. In addition to the foregoing mixing procedures, other conventional mixing procedures may be employed including, for example, hot roll milling or kneeding.

In addition to the aforementioned polymeric components, it is sometimes desirable to incorporate other additives into the blend. In this regard, such additives as stabilizers, lubricants, plasticizers, antioxidants, fire retardants, fillers, reinforcing fibers such as, for example, glass fibers or pigments can be employed in the blends of this invention in a manner similar to the employment of such additives in conventional polycarbonate blends.

0056247

The following examples are given to illustrate the invention but should not be construed as limiting its scope. Unless otherwise indicated, all parts and percentages are by weight.

Examples 1 through 13 and Comparative Runs A through E

For Examples 1 through 13 heterogeneous blends were prepared by tumble blending a particulate formed of a homopolycarbonate of bisphenol A with a particular form of random acid copolymer or an acid resin and/or a compatible resin until an apparently uniform mixture was obtained. The resulting blend was then charged to a Welding Engineer's Twin Screw Extruder having a barrel temperature profile (feed-to-die) as follows: 425°F (218°C), 425°F (218°C), 450°F (232°C), 450°F (232°C) and 475°F (246°C). The blend was extruded and granulated. Residence time of the blend in the extruder was about 30 seconds and the extruder was operated at 200 rpm. The resulting granules were injection molded at between 475° and 525°F (246° and 274°C) into tensile bars (16.26 cm x 1.27 cm x 3.175 mm) and impact discs (5.08 cm diameter by 3.2 mm).

Comparative Runs A through E are heterogeneous blends outside the scope of the invention prepared from a homopolycarbonate blended with a compatible resin, with a random acid copolymer and a compatible resin, and with a random acid copolymer and a noncompatible rubber containing resin.

Polycarbonate A was a homopolycarbonate of bisphenol-A having a weight average molecular weight, Mw, between 24,000 and 27,000 as determined by gel permeation chromatography.

Acid copolymer B was a styrene/acrylic acid (92 percent/8 percent) random copolymer having a Mw of 200,000. Acid copolymer C was a styrene/acrylic acid (85 percent/15 percent) random copolymer having a Mw of 150,000. Acid resin D was a styrene/methacrylic acid resin containing 51 percent rubber phase and 49 percent of styrene/methacrylic acid (97 percent/3 percent) random copolymer having a Mw of 84,000. Acid resin E was a styrene/methacrylic acid resin containing 50 percent rubber phase and 50 percent of styrene/methacrylic acid (94 percent/6 percent) random copolymer having a Mw of 100,000. Acid resin F was a styrene/-methacrylic acid resin containing 23 percent rubber phase and 77 percent of styrene/methacrylic acid (91 percent/9 percent) random copolymer that was mass polymerized. Acid resin G was a styrene/methacrylic acid resin containing 53 percent rubber phase and 47 percent of styrene/methacrylic acid (91 percent/9 percent) random copolymer that was mass polymerized. Acid resin H was a styrene/methyl methacrylate/methacrylic acid resin containing 50 percent rubber phase and 50 percent of styrene/methyl methacrylate/methacrylic acid (42 percent/48 percent/10 percent) random copolymer having a Mw of 117,000. Acid copolymer I was a styrene/-acrylic acid (98 percent/2 percent) random copolymer having a Mw of 255,000.

Compatible resin J was an acrylate resin containing 53.3 percent rubber phase and 46.7 percent methyl methacrylate/ethyl acrylate (95 percent/5 percent) random copolymer. This resin is sold by Rohm and Haas under the trade designation KM 611. Compatible resin K was an acrylate resin containing 50 percent butyl

acrylate rubber phase and 50 percent poly(methyl methacrylate) having a Mw of 200,000. Compatible resin L was an acrylate resin containing 50 percent rubber phase and 50 percent styrene/methyl methacrylate (50 percent/50 percent) random copolymer. The copolymer was made by emulsion polymerization. Compatible resin M was an ABS resin containing 42 percent rubber phase and 58 percent styrene/acrylonitrile (70 percent/30 percent) random copolymer having a Mw of 70,000 as determined by gel permeation chromatography using a polystyrene standard, wherein the rubber was an emulsion polymerized diene rubber. Compatible resin N was a blend of 50 percent random styrene/acrylonitrile (75 percent/25 percent) and 50 percent of compatible polymer M. Resin O was not a compatible resin in the sense of this invention as it was a polystyrene polymer having a molecular weight of 200,000 and contained 8 percent butadiene rubber. Resin P was a styrene/butadiene block rubber sold by Philips Petroleum under the trade name Solprene® 4115. Compatible resin Q was an acrylate resin containing 8 percent rubber phase and 92 percent styrene/methyl methacrylate (55 percent/45 percent) random copolymer.

In the designation PCO/AC/CP/R, PCO stands for the total polycarbonate content of the blend, AC stands for the total acid copolymer, CP stands for the total compatible polymer, and R stands for total rubber, all as a percent of the blend. Values for AC, CP and R included both grafted and nongrafted portions of each. For example, if a heterogeneous blend contains 40 percent polycarbonate, 30 percent acid resin in which 50 percent is both grafted and nongrafted rubber, and

® Trademark

30 percent compatible resin in which 40 percent both grafted and nongrafted rubber, then the total percent rubber (R) in the blend is 27 percent, the total percent of grafted and nongrafted acid copolymer (AC) is 15 percent, and the total percent of grafted and nongrafted compatible polymer (CP) is 28 percent.

The tensile bars and impact discs were tested for: tensile strength at yield and elongation according to ASTM D-638, notched Izod impact resistance according to ASTM D-256, Gardner Dart impact resistance using a 3.63 Kg drop weight and an opening of 32 mm on a test disc having a thickness of 3.175 mm and a Dart of 15.9 mm with a radius of curvature of 7.95 mm, deflection temperature under flexural load (DTUL) according to ASTM D-648 in which the disc is unannealed at 66 psi (0.46 MPa), and specular gloss according to ASTM D-523 made at an angle of 60°. At the time of molding the tensile bars, the processibility of the heterogeneous blends were determined by measuring the pressure required to inject a 25 g sample of heat plastified blend into a mold. The time for the blend to fill the mold was also recorded. The temperature profile of the injection molding machine was as follows: rear zone (feed end of the reciprocating screw section) was at 470°F ±5°F (243°C ±3°C), the front zone (nozzle end of the reciprocating screw section) was at 490°F ±5°F (254°C ±3°C), nozzle was at 480°F ±5°F (249°C ±3°C) and the mold was at 200°F ±10°F (93°C ±6°C). The sample of the heterogeneous blend was injected at a pressure between 300 and 500 psi (between 2 and 3 MPa) below the flash pressure. Fill time was determined by measuring the time required for the polymer to flow between two pressure transducers. The first transducer was positioned in the conduit between the nozzle and the mold

and the second transducer was positioned at the end of the mold opposite from the inlet end. The fill time measurement began when the pressure executed on the first transducer reached 2000 psi (14 MPa). The fill time measurement ended when the pressure on the second transducer reached 2000 psi (14 MPa). The dimensions of the mold was 162.6 mm x 12.7 mm x 3.175 mm, the inside diameter of the conduit connecting the nozzle to the inlet end of the mold was 6.6 mm. The nozzle into the mold was a rectangle 1.7 mm x 6.6 mm. The distance between the first and second transducer was 237 mm. The injection moding machine was a Newberry Injection Molding Machine having a 30-ton (27,000 Kg) clamp, a 1-ounce (28 gram) barrel capacity and a reciprocating screw. The test results are found in Table I.

0056247

TABLE I

| Examples and Comparative Runs | 1 | 2 | 3 | 4 |
| --- | --- | --- | --- | --- |
| Composition | | | | |
| Polycarbonate (PCO), pbw | A/40 | A/40 | A/40 | A/85 |
| Random Acid Copolymer (AC), pbw | B/30 | B/30 | B/30 | B/15 |
| Acid Resin (AC+R), pbw | | D/30 | E/30 | |
| Compatible Resin (CP+R), pbw | J/30 | | | |
| Proportions, % PCO/AC/CP/R | 40/30/14/16 | 40/44.7/0/15.3 | 40/45/0/15 | 85/15/0/0 |

TABLE I (cont'd)

| Examples and Comparative Runs | 1 | 2 | 3 | 4 |
|---|---|---|---|---|
| **Test Results** | | | | |
| Yield Tensile, psi (MPa) | 6500 (44.82) | 6000 (41.37) | 6400 (44.13) | 9100 (62.74) |
| Elongation, % | 116 | 8 | 96 | 125 |
| Notched Izod Impact Ft-lb/in (J/mm) | 3.3 (.18) | 13 (0.69) | 10 (0.53) | 3.0 (0.16) |
| Gardner Dart Impact In-lb (J) | 320+ (36.2+) | 200 (22.6) | 180 (20.3) | 320+ (36.2+) |
| DTUL, °F (°C) | 237 (114) | 240 (116) | 244 (118) | 276 (136) |
| Injection Pressure, psi (MPa), | 8512 (58.69) | 6312 (43.52) | 6875 (47.40) | 7462 (51.45) |
| Fill Time, sec | 2.8 | 2.7 | 2.2 | 2.2 |
| Gloss, % | 100+ | 83 | ND | ND |

TABLE I (cont'd)

| Examples and Comparative Runs | 5 | 6 | 7 | 8 |
|---|---|---|---|---|
| Composition | | | | |
| Polycarbonate (PCO), pbw | A/70 | A/50 | A/50 | A/50 |
| Random Acid Copolymer (AC), pbw | F/30 | F/50 | C/35 | B/19.7 |
| Acid Resin (AC+R), pbw | | | | |
| Compatible Resin (CP+R), pbw | | | J/15 | K/30.3 |
| Proportions, % PCO/AC/CP/R | 70/23.1/0/6.9 | 50/38.5/0/11.5 | 50/35/7/8 | 50/19.7/15.1/15.2 |

TABLE I (cont'd)

| Examples and Comparative Runs | 5 | 6 | 7 | 8 |
|---|---|---|---|---|
| **Test Results** | | | | |
| Yield Tensile, psi (MPa) | 7600 (52.40) | 7100 (48.95) | 8415 (58.02) | 6056 (41.75) |
| Elongation, % | 113 | 68 | 111 | 54 |
| Notched Izod Impact Ft-lb/in (J/mm) | 7.5 (0.40) | 6.8 (0.36) | 7.1 (0.38) | 6.5 (0.35) |
| Gardner Dart Impact In-lb (J) | 320+ (36.2+) | 320+ (36.2+) | 320+ (36.2+) | 320+ (36.2+) |
| DTUL, °F (°C) | 268 (131) | 260 (127) | 264 (129) | 243 (117) |
| Injection Pressure, psi (MPa), Fill Time, sec | 7625 (52.57) 2.9 | 7625 (52.57) 2.1 | 6125 (42.23) 2.7 | 7000 (48.26) 3.0 |
| Gloss, % | 38 | 40 | 100+ | 80 |

TABLE I (cont'd)

| Examples and Comparative Runs | 9 | 10 | 11 | 12 |
|---|---|---|---|---|
| Composition | | | | |
| Polycarbonate (PCO), pbw | A/40 | A/40 | A/40 | A/40 |
| Random Acid Copolymer (AC), pbw | B/37.4 | B/35.8 | | B/30 |
| Acid Resin (AC+R), pbw | G/22.6 | | H/60 | |
| Compatible Resin (CP+R), pbw | | L/24.2 | | M/30 |
| Proportions, % PCO/AC/CP/R | 40/48/0/12 | 40/35.8/12.1/12.1 | 40/30/0/30 | 40/30/17.4/12.6 |

TABLE I (cont'd)

| Examples and Comparative Runs | 9 | 10 | 11 | 12 |
|---|---|---|---|---|
| **Test Results** | | | | |
| Yield Tensile, psi (MPa) | 6650 (45.85) | 7120 (49.09) | 6565 (45.26) | 7131 (49.17) |
| Elongation, % | 92 | 48 | 43 | 30 |
| Notched Izod Impact Ft-lb/in (J/mm) | 6.5 (0.35) | 7.3 (0.39) | 10.2 (0.54) | 5.48 (0.29) |
| Gardner Dart Impact In-lb (J) | 200 (22.6) | 320+ (36.2+) | 280 (31.6) | 260 (29.4) |
| DTUL, °F (°C) | 240 (116) | 234 (112) | 236 (113) | 234 (116) |
| Injection Pressure, psi (MPa), | 4512 (31.11) | 4512 (31.11) | 5000 (34.47) | 4575 (31.54) |
| Fill Time, sec | 2.2 | 2.3 | 2.0 | 2.5 |
| Gloss, % | 95 | 100+ | 100+ | 100 |

TABLE I (cont'd)

| Examples and Comparative Runs | A | B | C |
|---|---|---|---|
| **Composition** | | | |
| Polycarbonate (PCO), pbw | A/40 | A/40 | A/40 |
| Random Acid Copolymer (AC), pbw | | B/30 | B/20 |
| Acid Resin (AC+R), pbw | | | |
| Compatible Resin (CP+R), pbw | N/60 | O/30 | O/35<br>P/5 |
| Proportions, % PCO/AC/CP/R | 40/0/47.4/12.6 | 40/30/27.6*/2.4 | 40/20/32.7*/7.8 |

TABLE I (cont'd)

| Examples and Comparative Runs | A | B | C |
|---|---|---|---|
| Test Results | | | |
| Yield Tensile, psi (MPa) | 7095 (48.92) | 6920 (47.71) | 5785 (39.89) |
| Elongation, % | 124 | 8 | 118 |
| Notched Izod Impact Ft-lb/in (J/mm) | 9.2 (0.49) | 0.4 (0.02) | 1.1 (0.06) |
| Gardner Dart Impact In-lb (J) | 320+ (36.2+) | <20 (<2.3) | <20 (<2.3) |
| DTUL, °F (°C) | 223 (106) | 234 (112) | 233 (112) |
| Injection Pressure, psi (MPa), Fill Time, sec | 5400 (37.23) 1.9 | 5000 (34.47) 1.4 | 5000 (34.47) 1.5 |
| Gloss, % | 100 | 42 | 65 |

TABLE I (cont'd)

| Examples and Comparative Runs | D | 13 | E |
|---|---|---|---|
| Composition | | | |
| Polycarbonate (PCO), pbw | A/50 | A/50 | A/40 |
| Random Acid Copolymer (AC), pbw | | I/20 | I/30 |
| Acid Resin (AC+R), pbw | | | |
| Compatible Resin (CP+R), pbw | Q/50 | M/30 | M/30 |
| Proportions, % PCO/AC/CP/R | 50/0/46/4 | 50/20/17.4/12.6 | 40/30/17.4/12.6 |

TABLE I (cont'd)

| Examples and Comparative Runs | D | 13 | E |
|---|---|---|---|
| **Test Results** | | | |
| Yield Tensile, psi (MPa) | 7725 (53.26) | 6645 (45.82) | 6620 (45.64) |
| Elongation, % | 84 | 128 | 66 |
| Notched Izod Impact Ft-lb/in (J/mm) | 7.9 (0.42) | 9.19 (0.49) | 4.45 (0.24) |
| Gardner Dart Impact In-lb (J) | 320+ (36.2+) | 320+ (36.2+) | 90 (10.2) |
| DTUL, °F (°C) | 230 (110) | 240 (116) | 224.5 (107) |
| Injection Pressure, psi (MPa), Fill Time, sec | 5000 (34.47) 1.8 | 5962 (41.11) 1.0 | 5562 (38.35) 0.6 |
| Gloss, % | 99 | 100 | 100 |

Notes: * not a compatible polymer.
ND - means not determined.

As evidenced by the data of Table I, the blends of the present invention exhibit increased impact resistance and temperature resistance at a given processability. Also shown in Example 13 and Comparative Run E, blends wherein the acid copolymer contains only 2 weight percent acid comonomer require additional polycarbonate to provide the desired impact strength (Gardner Dart). Such impact strength is also achieved by the inclusion of additional rubber into the blend of Comparative Run E.

0056247

1. A heterogeneous blend comprising a polycarbonate of a dihydric phenol blended with a random acid copolymer of a monovinylidene aromatic monomer and an α,β-ethylenically unsaturated carboxylic acid, said components being present in proportions such that the blend has (a) a Gardner Dart impact strength of at least 100 inch-pounds (11.3 joules), (b) a notched Izod impact strength of at least 3 foot-pounds/inch of notch (0.2 joule per millimeter of notch), (c) a heat resistance of at least 210°F (99°C) as determined by ASTM D-648 (unannealed at 66 pounds per square inch (455 kilopascals)) and (d) a processability of less than 9000 pounds per square inch (62.05 megapascals) at a mold fill time of 3.0 seconds as determined by the test procedure herein.

2. The blend of Claim 1 wherein the dihydric phenol is a bis(hydroxyphenyl)alkylidene, the monovinylidene aromatic monomer is styrene and the unsaturated acid is acrylic acid or methacrylic acid.

3. The heterogeneous blend of Claim 1 additionally containing a rubber component, and optionally, a compatible polymer of a polar monomer other than an acid; said rubber component containing a copolymer of a rubber polymer blocked or grafted with a portion of an acid copolymer and/or a polymer of a polar monomer wherein said block or graft copolymer is present in an amount sufficient to measurably increase the impact resistance of the blend, said polar monomer being a polymerizable ethylenically unsaturated organic compound which bears a polar group having a group moment in the range from 1.4 to 4 Debye units determined in accordance with Smyth, C.P., Dielectric Behavior and Structure, McGraw-Hill Book Company, Inc., New York (1955).

4. The blend of Claim 3 wherein the dihydric phenol is a bis(hydroxyphenyl)alkylidene, the acid copolymer is a copolymer of styrene and acrylic acid and/or methacrylic acid or a blend of styrene/acrylic acid copolymer and styrene/methacrylic acid copolymer, the compatible polymer is a polymer of an ethylenically unsaturated nitrile, an ethylenically unsaturated carboxylic acid or an alkyl ester of an ethylenically unsaturated carboxylic acid, the rubber component is a diene rubber polymer or a butyl acrylate rubber polymer wherein a portion of said rubber polymer is grafted with a portion of the acid copolymer and/or the compatible polymer.

5. The blend of Claim 4 which consists essentially of from 25 to 88 weight percent of the polycarbonate, from 10 to 70 weight percent of the acid copolymer, up to 35 weight percent of the compatible

copolymer and from 2 to 30 weight percent of the rubber polymer, based upon the weight of the blend.

6. The blend of Claim 4 wherein the polycarbonate is a homopolycarbonate of bisphenol-A, the compatible copolymer is a styrene/acrylonitrile copolymer and the rubber polymer is a polymer of butadiene wherein a portion of the rubber polymer is grafted with a portion of the styrene/acrylonitrile copolymer.

7. The blend of Claim 5 wherein the rubber polymer is a polymer of butadiene wherein a portion of the rubber polymer is grafted with a portion of the acid copolymer.

8. The blend of Claim 4 wherein the polycarbonate is a homopolycarbonate of bisphenol-A, the compatible copolymer is styrene/methyl methacrylate copolymer and the rubber polymer is a polymer of butadiene wherein a portion of the rubber polymer is grafted with a portion of the styrene/methyl methacrylate copolymer.

9. The blend of Claim 4 wherein the acid copolymer contains an alkyl acrylate or alkyl methacrylate.

10. The blend of Claim 4 wherein the acid copolymer is a copolymer of styrene, methyl methacrylate and methacrylic acid.